# EUROPÄISCHE PATENTSCHRIFT

(11) **EP 3 201 051 B1**
(45) Veröffentlichungstag und Bekanntmachung des Hinweises auf die Patenterteilung: **05.12.2018**
(21) Anmeldenummer: 15775140.5
(22) Anmeldetag: 28.09.2015
(51) Int. Cl.: B60R 22/46, B60R 22/28

(54) **GURTAUFROLLER MIT ZWEITEILIGEM STRAFFERANTRIEBSRAD**
BELT RETRACTOR WITH TWO-PART TENSIONING DRIVE WHEEL
ENROULEUR DE CEINTURE DE SÉCURITÉ MUNI D'UNE ROUE D'ENTRAÎNEMENT DE PRÉTENSIONNEUR EN DEUX PARTIES

(30) Priorität: 29.09.2014 DE 102014114140
(43) Veröffentlichungstag der Anmeldung: 09.08.2017
(73) Patentinhaber: Autoliv Development AB, 447 83 Vårgårda (SE)
(72) Erfinder: TRÜBNER, Claudia, 21382 Brietlingen (DE); WULFF, Frank, 25358 Horst (DE); KRAUS, Juri, 22179 Hamburg (DE); SCHUBEL, Karsten, 24558 Henstedt-Ulzburg (DE); KUBBE, Thomas, 24568 Kaltenkirchen (DE)
(74) Vertreter: Feucker, Max Martin
(86) Internationale Anmeldenummer: PCT/EP2015/072220
(87) Internationale Veröffentlichungsnummer: WO 2016/050675

(56) Entgegenhaltungen:
- WO-A1-2014/048522
- DE-A1- 19 512 660
- DE-B3-102008 059 386

## Beschreibung

Die vorliegende Erfindung betrifft einen Gurtaufroller mit einer einen Wellenkörper, einen Profilkopf und einen Torsionsstab umfassenden Gurtwelle, wobei der in dem Wellenkörper angeordnete Torsionsstab mit einem ersten Ende mit dem Wellenkörper und mit einem zweiten Ende mit dem Profilkopf verbunden ist und der Profilkopf fahrzeugfest blockierbar ist, und mit einem Gurtstraffer, wobei ein Strafferantriebsrad des Gurtstraffers unmittelbar mit dem Profilkopf der Gurtwelle drehfest verbunden ist und wobei zum Antreiben der Gurtwelle in Aufwickelrichtung Massekörper kraftübertragend in Eingriff mit dem Strafferantriebsrad bringbar sind, wobei das Strafferantriebsrad zweiteilig aus dem Profilkopf der Gurtwelle und einem auf den Profilkopf aufgeschobenen und mit diesem kraft- und formschlüssig verbundenen Aufschubring ausgebildet ist, wobei an dem Profilkopf und an dem Aufschubring jeweils gegenüberliegende, sich zu Aufnahmen für die Massekörper ergänzende, kalottenförmige Teilaufnahmen geformt sind.

Ein Gurtaufroller ist beispielsweise aus DE 10 2008 059 386 B3 bekannt, wobei ein einteiliges Strafferantriebsrad auf den Profilkopf aufgeschoben ist und dort von einem gesonderten Lagerring gesichert ist, auf dem sich der Wellenkörper bei seiner Relativbewegung zu dem blockierten Profilkopf abwälzt. Es sind somit eine Mehrzahl von Teilen bei der Montage auf den Profilkopf aufzuschieben.

Soweit aus EP 0 755 340 B1 eine zweiteilige Ausbildung des Strafferantriebsrades bekannt ist, lehrt diese die unmittelbare Verbindung des Strafferantriebsrades an dem Wellenkörper zum Aufwickeln des Gurtbandes. Die Verwendung eines kraftbegrenzenden Torsionsstabes und eines Profilkopfes zur fahrzeugsensitiven oder gurtsensitiven Festlegung des Wellenkörpers auf der Seite des Strafferantriebsrades ist nicht offenbart.

Ein Gurtaufroller mit den eingangs genannten Merkmalen ist aus WO 2014/048522 A1 bekannt, bei welchem die Position der Aufschubhülse nicht genau vorgegeben ist.

Aufgabe der vorliegenden Erfindung ist es daher, das mit Bezug zum Stand der Technik geschilderte Problem zu lösen und insbesondere einen Gurtaufroller anzugeben, welcher einfach zu montieren ist und welcher einen geringeren Platzbedarf aufweist.

Gelöst werden die Aufgaben durch einen Gurtaufroller mit den Merkmalen des unabhängigen Anspruchs. Vorteilhafte Weiterbildungen des Gurtaufrollers sind in den abhängigen Ansprüchen und in der Beschreibung angegeben, wobei Merkmale der vorteilhaften Weiterbildungen in technologisch sinnvoller Weise beliebig miteinander kombinierbar sind.

Gelöst werden diese Aufgaben mit einem Gurtaufroller mit den eingangs genannten Merkmalen, wobei an dem Aufschubring eine axial vorragende, ringförmige Aufschubhülse ausgebildet ist, die mit einer stirnseitigen Fläche in Anlage mit dem Profilkopf ist. Durch die stirnseitige Anlage ist zum einen die Position der Aufschubhülse und damit die Position des Aufschubringes auf dem Vorsprung vorgegeben und zum anderen kann somit ein umlaufender Spalt zwischen den Teilaufnahmen an dem Profilkopf einerseits und den Teilaufnahmen an dem Aufschubring andererseits ausgebildet werden.

Die vorliegende Erfindung ist also auf einem Gurtaufroller gerichtet, bei dem der fahrzeugfest blockierbare Profilkopf und das Strafferantriebsrad auf der gleichen Seite des Wellenkörpers angeordnet sind, wobei zusätzlich ein kraftbegrenzender Torsionsstab zwischen dem Profilkopf und dem Wellenkörper vorgesehen ist. Soweit also der Torsionsstab im Beschleunigungsfall bei fahrzeugfest blockiertem Profilkopf die Krafteinwirkung auf den Insassen begrenzt, kann der Gurtstraffer das Gurtband bei Bedarf durch Antreiben der Gurtwelle aufwickeln.

Die vorliegende Erfindung sieht nun vor, dass das Strafferantriebsrad aus zwei Teilen besteht. Das erste Teil ist der Profilkopf der Gurtwelle, und das zweite Teil ist der Aufschubring. Zur formschlüssigen Festlegung des Aufschubringes auf den Profilkopf gegen eine Relativbewegung in Umfangsrichtung weisen der Profilkopf und der Aufschubring Ausnehmungen und entsprechende Erhebungen auf. Um den Profilkopf mit dem Aufschubring insbesondere in axialer Richtung miteinander kraftschlüssig zu verbinden, kann insbesondere ein Ende des Profilkopfes verstemmt beziehungsweise gekrimpt werden, so dass aufgrund der plastischen Verformung des Profilkopfes der Aufschubring nicht mehr zerstörungsfrei von dem Profilkopf gelöst werden kann. Um die Funktion des einteiligen Strafferantriebsrades zu erreichen, weisen der Profilkopf und der Aufschubring kalottenförmige Teilaufnahmen auf, die jeweils paarweise zusammen eine Aufnahme für die Massekörper des Gurtstraffers ausbilden.

Dadurch, dass die kalottenförmigen Teilaufnahmen unmittelbar an dem Profilkopf ausgebildet werden können, weist der mit dem Aufschubring versehene Profilkopf einen geringeren Platzbedarf auf. Zudem ist aufgrund der form- und kraftschlüssigen Verbindung kein zusätzliches Bauteil zur Festlegung des Strafferantriebes an dem Profilkopf notwendig.

Es kann vorgesehen sein, dass der Profilkopf der Gurtwelle einen axial vorstehenden, den Torsionsstab innen aufnehmenden, ringförmigen Vorsprung aufweist und der Aufschubring vollständig auf den ringförmigen Vorsprung aufgeschoben ist, wobei zumindest ein über den aufgeschobenen Aufschubring hervorstehender Endbereich des Vorsprungs zum kraftschlüssigen Verbinden mit dem aufgeschobenen Aufschubring plastisch verformt ist. Der Vorsprung dient also zum einen zur formschlüssigen Verbindung des Torsionsstabes mit dem Profilkopf im Inneren und zum anderen zum Aufschieben des Aufschubrings, wobei der Endbereich zur Fixierung sowohl des Aufschubringes als auch insbesondere des Torsionsstabes plastisch verformt ist.

Um die Position des Aufschubringes genauer vorzugeben und insbesondere um eine größere Lagerfläche des Aufschubringes gegenüber dem Profilkopf bereitzustellen, kann vorgesehen sein, dass ein ringförmiger Schlitz an dem Profilkopf ausgebildet ist, in den eine an dem Aufschubring ausgebildete, axial vorragende, ringförmige Aufschubhülse eingesteckt ist. Der ringförmige Schlitz verläuft dabei unmittelbar angrenzend an den Vorsprung des Profilkopfes und hält den Aufschubring insbesondere beim Krimpen bzw. Stemmen des Vorsprunges in der vorgegebenen Position.

Eine besonders sichere Verbindung zwischen Aufschubring und Profilkopf wird in diesem Zusammenhang erreicht, wenn die Aufschubhülse eine Länge aufweist, die mindestens so groß ist wie ein Durchmesser von einer durch zwei kalottenförmige Teilaufnahmen ausgebildeten Aufnahme für einen Massekörper, und die Aufschubhülse über die gesamte Länge innen an dem Vorsprung anliegt.

In einer weiteren Ausführungsform ist vorgesehen, dass radial außen an dem Vorsprung axial ausgerichtete Nuten zur Aufnahme von entsprechenden axial verlaufender Federn an der Innenseite des Aufschubrings ausgebildet sind und Verformungselemente stirnseitig an dem Vorsprung fluchtend mit den Nuten ausgebildet sind, die plastisch zum Verbinden des Profilkopfs mit dem Aufschubring und dem zweiten Ende des Torsionsstabs verformt sind. Insbesondere sind die Verformungselemente zum Verbinden des Aufschubringes mit dem Vorsprung in Umfangsrichtung plastisch verformt und zum Verbinden des Vorsprunges mit dem Torsionsstab radial nach innen plastisch verformt.

Einer weiteren Ausgestaltung des Gurtaufrollers folgend, ist an dem Aufschubring auf einer dem Wellenkörper zugewandten Seite einstückig ein Lagerring für den Wellenkörper ausgebildet, wobei sich der Wellenkörper und das zweistückige Strafferantriebsrad in dem Bereich des Lagerrings axial überlappen. Dadurch, dass auch der Lagerring für den Wellenkörper einstückig mit dem Aufschubring ausgebildet ist, ist zum einen die Montage vereinfacht und zum anderen kann ein noch geringerer Platzbedarf erreicht werden.

Die Erfindung sowie das technische Umfeld werden nachfolgend anhand der Figuren beschrieben, wobei darauf hingewiesen wird, dass die Figuren eine bevorzugte Ausführungsform der Erfindung zeigen, diese jedoch nicht darauf beschränkt ist. Es zeigen schematisch
- Fig. 1:: eine Perspektivansicht eines Profilkopfes mit einem darauf aufgeschobenem Aufschubring,
- Fig. 2:: eine Schnittansicht durch den Profilkopf mit dem darauf aufgeschobenen Aufschubring,
- Fig. 3:: eine Perspektivansicht des Profilkopfs,
- Fig. 4:: eine Schnittansicht durch den Profilkopf,
- Fig. 5: eine Perspektivansicht des Aufschubrings und
- Fig. 6:: eine Schnittansicht durch den Aufschubring.

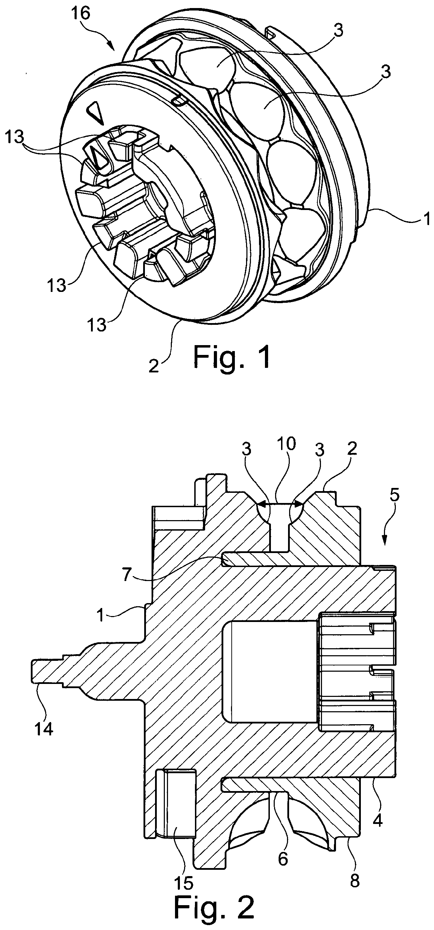

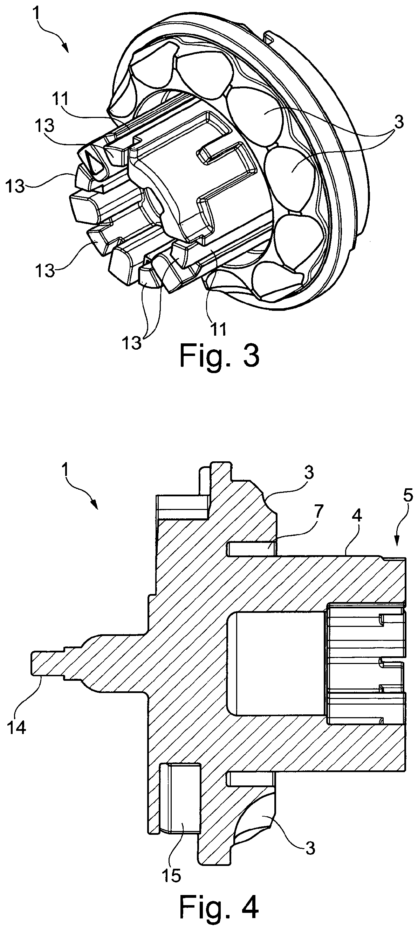

In den Fig. 1 bis 4 ist unter anderem ein Profilkopf 1 eines Gurtaufrollers mit einem Zapfen 14 zur Lagerung des Profilkopfes 1 an einem Gehäuse des Gurtaufrollers dargestellt. In dem Profilkopf 1 ist eine Blockierklinkenaufnahme 15 ausgebildet, in welcher eine gurtbandsensitiv und/oder fahrzeugsensitiv ansteuerbare Blockierklinke angeordnet werden kann. Auf einer dem Zapfen 14 und der Blockierklinkenaufnahme 15 gegenüberliegenden Seite weist der Profilkopf 1 einen ringförmigen Vorsprung 4 auf, in dessen Inneres ein Torsionsstab mit einem Ende eingeschoben und festgelegt werden kann. Auf seinem Außenumfang weist der Vorsprung 4 axial verlaufende Nuten 11 auf, an die sich stirnseitig in einem Endbereich 5 des Vorsprungs 4 Verformungselemente 13 fluchtend mit den Nuten 11 anschließen. An einem dem Endbereich 5 gegenüberliegenden Ende des Vorsprungs 4 ist ein den Vorsprung 4 umlaufender ringförmiger Schlitz 7 ausgebildet.

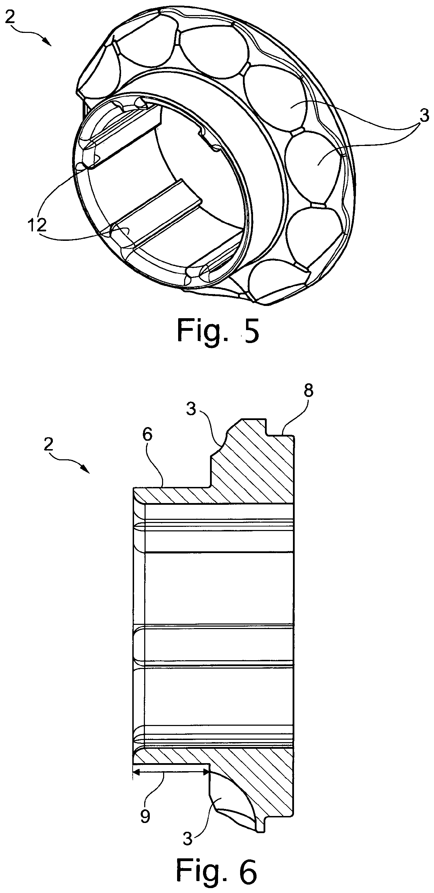

Auf den Vorsprung 4 des Profilkopfes 1 ist ein auch in den Fig. 5 und 6 dargestellter Aufschubring 2 aufgeschoben. Der Aufschubring 2 umfasst eine axial vorragende, ringförmige Aufschubhülse 6. Die Aufschubhülse 6 hat eine Länge 9. Auf seiner inneren Seite weist der Aufschubring 2 axial verlaufende Federn 12 auf, die mit den Nuten 11 am Profilkopf 1 korrespondieren. Auf einer der Aufschubhülse 6 gegenüberliegenden Seite weist der Aufschubring 2 einen einstückig an ihm ausgebildeten Lagerring 8 auf.

Zur Montage wird der Aufschubring 2 auf den Vorsprung 4 des Profilkopfes 1 aufgeschoben, wobei die Federn 12 in die Nuten 11 eingreifen. Dabei wird der Aufschubring 2 mit der Aufschubhülse 6 in den ringförmigen Schlitz 7 eingeführt, bis die Stirnseite der Aufschubhülse 6 in Anlage mit dem Profilkopf 1 kommt. In dem aufgeschobenen Zustand bilden kalottenförmig ausgebildete Teilaufnahmen 3 an dem Profilkopf 1 und an dem Aufschubring 6 gemeinsam jeweils paarweise Aufnahmen mit einem Durchmesser 10 für Massekörper eines Gurtstraffers aus. Somit wird ein Strafferantriebsrad 16 zweiteilig von dem Profilkopf 1 und dem Aufschubring 2 ausgebildet.

Um den Aufschubring 2 auf dem Vorsprung 4 kraftschlüssig zu fixieren, werden die Verformungselemente 13 in Umfangsrichtung mit Kraft beaufschlagt und verformt. Es kann insbesondere auch vorgesehen sein, dass vor der Kraftbeaufschlagung ein nicht dargestellter Torsionsstab ins Innere des Vorsprunges 4 eingeführt wird, wobei die Verformungselemente 13 zusätzlich zu der Kraftbeaufschlagung in Umfangsrichtung radial nach innen mit Kraft beaufschlagt und verformt werden, so dass der Torsionsstab kraftschlüssig in den Vorsprung 4 festgelegt ist und mit dem Profilkopf 1 verbunden ist. Um eine möglichst sichere Verbindung zwischen dem Aufschubring 2 und dem Profilkopf 1 zu gewährleisten und eine große Lagerfläche zwischen Aufschubring 2 und Profilkopf 1 bereitzustellen, ist die Länge 9 der Aufschubhülse 6 größer als der Durchmesser 10 der durch die Teilaufnahmen 3 gebildeten Aufnahmen für die Massekörper.

In einem an einem Gurtaufroller montierten Zustand überlappt der an dem Aufschubring 2 ausgebildete Lagerring 8 mit einem radial außen angeordneten Wellenkörper, der zumindest im Belastungsfall durch den Lagerring 8 radial abgestützt wird.

### Bezugszeichenliste

- 1: Profilkopf
- 2: Aufschubring
- 3: Teilaufnahme
- 4: Vorsprung
- 5: Endbereich
- 6: Aufschubhülse
- 7: Schlitz
- 8: Lagerring
- 9: Länge
- 10: Durchmesser
- 11: Nut
- 12: Feder
- 13: Verformungselement
- 14: Zapfen
- 15: Blockierklinkenaufnahme
- 16: Strafferantriebsrad

## Patentansprüche

1. Gurtaufroller mit einer einen Wellenkörper, einen Profilkopf (1) und einen Torsionsstab umfassenden Gurtwelle, wobei der in dem Wellenkörper angeordnete Torsionsstab mit einem ersten Ende mit dem Wellenkörper und mit einem zweiten Ende mit dem Profilkopf (1) verbunden ist und der Profilkopf (1) fahrzeugfest blockierbar ist, und mit einem Gurtstraffer, wobei ein Strafferantriebsrad (16) des Gurtstraffers unmittelbar mit dem Profilkopf (1) der Gurtwelle drehfest verbunden ist und wobei zum Antreiben der Gurtwelle in Aufwickelrichtung Massekörper kraftübertragend in Eingriff mit dem Strafferantriebsrad (16) bringbar sind, wobei das Strafferantriebsrad (16) zweiteilig aus dem Profilkopf (1) der Gurtwelle und einem auf den Profilkopf (1) aufgeschobenen und mit diesem kraft- und formschlüssig verbundenen Aufschubring (2) ausgebildet ist, wobei an dem Profilkopf (1) und an dem Aufschubring (2) jeweils gegenüberliegende, sich zu Aufnahmen für die Massekörper ergänzende, kalottenförmige Teilaufnahmen (3) geformt sind, **dadurch gekennzeichnet, dass** an dem Aufschubring (2) eine axial vorragende, ringförmige Aufschubhülse (6) ausgebildet ist, die mit einer stirnseitigen Fläche in Anlage mit dem Profilkopf (1) ist.

2. Gurtaufroller nach Anspruch 1, wobei der Profilkopf (1) der Gurtwelle einen axial vorstehenden, den Torsionsstab innen aufnehmenden, ringförmigen Vorsprung (4) aufweist und der Aufschubring (2) vollständig auf den ringförmigen Vorsprung (4) aufgeschoben ist, wobei zumindest ein über den aufgeschobenen Aufschubring (2) hervorstehender Endbereich (5) des Vorsprungs (4) zum kraftschlüssigen Verbinden mit dem aufgeschobenen Aufschubring (2) plastisch verformt ist.

3. Gurtaufroller nach einem der vorhergehenden Ansprüche, wobei ein ringförmiger Schlitz (7) an dem Profilkopf (1) ausgebildet ist, in den eine an dem Aufschubring (2) ausgebildete, axial vorragende, ringförmige Aufschubhülse (6) eingesteckt ist.

4. Gurtaufroller nach Anspruch 1 und 2 oder 3, wobei die Aufschubhülse (6) eine Länge (9) aufweist, die mindestens so groß ist wie ein Durchmesser (10) von einer durch zwei kalottenförmige Teilaufnahmen (3) ausgebildeten Aufnahme für einen Massekörper, und die Aufschubhülse (6) über die gesamte Länge (9) innen an dem Vorsprung (4) anliegt.

5. Gurtaufroller nach einem der Ansprüche 2 bis 4, wobei radial außen an dem Vorsprung (4) axial ausgerichtete Nuten (11) zur Aufnahme von entsprechenden axial verlaufender Federn (12) an der Innenseite des Aufschubrings (2) ausgebildet sind und Verformungselemente (13) stirnseitig an dem Vorsprung (4) fluchtend mit den Nuten (11) ausgebildet sind, die plastisch zum Verbinden des Profilkopfs (1) mit dem Aufschubring (2) und dem zweiten Ende des Torsionsstabs verformt sind.

6. Gurtaufroller nach einem der vorhergehenden Ansprüche, wobei an dem Aufschubring (2) auf einer dem Wellenkörper zugewandten Seite einstückig ein Lagerring (8) für den Wellenkörper ausgebildet ist, wobei sich der Wellenkörper und das zweistückige Strafferantriebsrad in dem Bereich des Lagerrings (8) axial überlappen.

## Claims

1. Belt retractor with a belt shaft comprising a shaft body, a profile head (1) and a torsion rod, wherein the torsion rod arranged in the shaft body is connected by a first end to the shaft body and by a second end to the profile head (1) and the profile head (1) can be blocked firmly on the vehicle, and with a belt tensioner, wherein a tensioning drive wheel (16) of the belt tensioner is directly connected in a non-rotating manner to the profile head (1) of the belt shaft, and wherein solid bodies can be placed in a force-transferring manner in engagement with the tensioning drive wheel (16) for driving the belt shaft in the winding-up direction, wherein the tensioning drive wheel (16) is formed in two parts from the profile head (1) of the belt shaft and from a push-on ring (2) pushed onto the profile head (1) and positively connected to the latter in a force-locking manner, wherein opposing, cup-shaped partial receptacles (3) are formed on the profile head (1) and on the push-on ring (2), **characterized by that** an axially projecting annular push-on casing (6) is formed on the push-on ring (2), which casing makes contact on a front-side surface with the profile head (1).

2. Belt retractor according to Claim 1, wherein the profile head (1) of the belt shaft comprises an axially projecting, annular projection (4) which receives the torsion rod on the inside and the push-on ring (2) is completely pushed on the annular projection (4), wherein at least one end area (5) of the projection (4), which end area projects over the pushed-on push-on ring (2) is plastically deformed for the force-locking connection to the pushed-on push-on ring (2).

3. The belt retractor according to one of the previous claims, wherein an annular slot (7) is formed on the profile head (1) into which an annular push-on casing (6), which projects axially and is formed on the push-on ring (2), is inserted.

4. The belt retractor according to Claims 1 and 2 or 3, wherein the push-on casing (6) has a length (9) which is at least as great as a diameter (10) of a receptacle for a solid body, which receptacle is formed by two cup-shaped partial receptacles (3), and the push-on casing (6) rests over its entire length (9) inside on the projection (4).

5. The belt retractor according to one of Claims 2 to 4, wherein grooves (11) which are axially aligned radially outside on the projection (4) and for receiving corresponding, axially running springs (12) are formed on the inner side of the push-on ring (2) and deformation elements (13) are formed on the front side on the projection (4) and are aligned with the grooves (11), which elements are plastically deformed for connecting the profile head (1) to the push-on ring (2) and to the second end of the torsion rod.

6. The belt retractor according to one of the previous claims, wherein a bearing ring (8) for the shaft body is formed in one part on the push-on ring (2) on a side facing the shaft body, wherein the shaft body and the two-part tensioning drive wheel axially overlap in the area of the bearing ring (8).

## Revendications

1. Enrouleur de ceinture de sécurité comportant un arbre de ceinture comprenant un corps d'arbre, une tête profilée (1) et une barre de torsion, ladite barre de torsion agencée dans le corps d'arbre étant raccordée au corps d'arbre par une première extrémité et à la tête profilée (1) par une deuxième extrémité, et la tête profilée (1) pouvant être bloquée à demeure par rapport au véhicule ; et comportant un prétensionneur de ceinture, une roue d'entraînement de prétensionneur (16) du prétensionneur de ceinture étant directement raccordée, solidaire en rotation, à la tête profilée (1) de l'arbre de ceinture, et des masselottes pouvant être mises en prise avec la roue d'entraînement de prétensionneur (16) d'une manière permettant une transmission de force, pour entraîner l'arbre de ceinture dans la direction d'enroulement, la roue d'entraînement de prétensionneur (16) étant constituée en deux parties à partir de la tête profilée (1) de l'arbre de ceinture et d'une bague d'insertion (2) insérée sur la tête profilée (1) et raccordée à cette dernière à force et par complémentarité de forme ; des logements partiels (3) en forme de calottes respectivement opposés et complémentaires afin de former des logements pour les masselottes étant formés au niveau de la tête profilée (1) et de la bague d'insertion (2), **caractérisé en ce qu'**une douille d'insertion (6) annulaire est constituée sur la bague d'insertion (2) en faisant axialement saillie pour venir en appui contre la tête profilée (1) par une face frontale de celle-ci.

2. Enrouleur de ceinture de sécurité selon la revendication 1, dans lequel la tête profilée (1) de l'arbre de ceinture présente une saillie annulaire (4) saillante dans le sens axial et recevant intérieurement la barre de torsion, la bague d'insertion (2) étant totalement insérée sur la saillie annulaire (4), et au moins une section terminale (5) de la saillie (4), qui ressort de la bague d'insertion (2) insérée, est déformée plastiquement pour réaliser une liaison à force avec la bague d'insertion (2) insérée.

3. Enrouleur de ceinture de sécurité selon l'une des revendications précédentes, dans lequel une fente annulaire (7) est constituée sur la tête profilée (1) pour l'emboitement d'une douille d'insertion (6) annulaire constituée sur la bague d'insertion (2) en faisant axialement saillie.

4. Enrouleur de ceinture de sécurité selon la revendication 1 et 2 ou 3, dans lequel la douille d'insertion (6) présente une longueur (9) au moins égale au diamètre (10) d'un logement destiné à une masselotte constitué par deux logements partiels (3) en forme de calotte, et la douille d'insertion (6) repose intérieurement sur la saillie (4) sur la totalité de la longueur (9).

5. Enrouleur de ceinture de sécurité selon l'une des revendications 2 à 4, dans lequel des rainures (11) radialement extérieures sont constituées sur la saillie (4) selon une orientation axiale afin de recevoir des ressorts (12) à étendue axiale correspondants présents sur le côté intérieur de la bague d'insertion (2), et des éléments de déformation (13) sont constitués sur l'avant de la saillie (4) de niveau avec les rainures (11) en étant plastiquement déformables afin d'assembler la tête profilée (1) avec la bague d'insertion (2) et la deuxième extrémité de la barre de torsion.

6. Enrouleur de ceinture de sécurité selon l'une quelconque des revendications précédentes, dans lequel une bague d'appui (8) destinée au corps d'arbre est constituée d'un seul tenant avec la bague d'insertion (2), sur un côté de celle-ci qui est tourné vers le corps d'arbre, le corps d'arbre et la roue d'entraînement de prétensionneur en deux parties se chevauchant axialement à proximité de la bague d'appui (8).
